# EUROPEAN PATENT SPECIFICATION

(11) **EP 2 957 746 B1**
(45) Date of publication and mention of the grant of the patent: **28.04.2021**
(21) Application number: 15171982.0
(22) Date of filing: 12.06.2015
(51) Int. Cl.: F02C 7/18, F01D 9/06

(54) **HIGH PRESSURE TURBINE COOLING**
HOCHDRUCKTURBINENKÜHLUNG
REFROIDISSEMENT DE TURBINE HAUTE PRESSION

(30) Priority: 17.06.2014 US 201462013109 P
(43) Date of publication of application: 23.12.2015
(73) Proprietor: Raytheon Technologies Corporation, Farmington, CT 06032 (US)
(72) Inventor: HILL, James D., Tolland, CT 06084 (US); MERRY, Brian D., Andover, CT 06232 (US); SUCIU, Gabriel L., Glastonbury, CT 06033 (US)
(74) Representative: Dehns

(56) References cited:
- EP-A2- 2 587 028
- WO-A1-2013/144111
- US-A1- 2013 199 153
- US-A1- 2013 219 918
- US-A1- 2013 219 919

## Description

### TECHNICAL FIELD

The present disclosure relates generally to a cooling system for cooling turbine stages in a gas turbine engine, and more specifically to a system for utilizing compressor bleed air to cool at least one turbine stage.

### BACKGROUND

Gas turbine engines, such as those utilized in commercial aircraft, include a compressor section that compresses air and a combustor section that ignites combustion gasses mixed with the compressed air. The gasses generated by the combustion section are super-heated and expelled through a turbine section, driving the turbine section to rotate. Absent some form of cooling, the high temperatures of the expelled gasses can cause thermal degradation to occur in the turbine section.

To mitigate thermal degradation from the extreme temperatures, some or all of the turbine stages are actively cooled by passing relatively cool air through the turbine stage. The active cooling increases the life span of the components in the actively cooled turbine stage by reducing breakage resulting from thermal wear. In some example gas turbine engines the relatively cool air is drawn from a bleed located in the compressor section (referred to as a compressor bleed) and is piped directly to the actively cooled turbine stage.

In practical applications, the pressure of the relatively cool air must meet or exceed a required threshold pressure level in order to properly pass through the corresponding turbine stage and provide the cooling effect. Thus, the particular compressor stage selected for the compressor bleed must be at a minimum level of pressure.

As air passes through the compressor section and the pressure increases, the temperature of the air also increases. In some gas turbine engines this can result in the air bled from a compressor stage having a high enough pressure being warmer than desired and not being capable of fully cooling the corresponding turbine stage. The lack of full cooling decreases the life span of the cooled turbine stage components.

US 2013/219918 A1 relates to a buffer cooling system that combines the use of multiple compartments of the gas turbine engine architecture to condition portions of the gas turbine engine. WO 2013/144111 A1 relates to a method for operating a gas turbine with cooling airlines which are fed from the compressor at different pressure levels. US 2013/199153 A1 relates to a turbine, such as a gas turbine. EP 2587028 A2 relates to a gas turbine having an active clearance control system to ensure rotating blades do not rub against their seals in the stationary casing of the gas turbine.

The invention relates to a method for cooling a turbine stage of a gas turbine engine according to claim 1. In one example, a gas turbine engine includes a compressor section having a plurality of compressor stages, a combustor fluidly connected to the compressor section, a turbine section fluidly connected to the combustor section, the turbine section having at least one stage, a compressor bleed structure disposed in one of the plurality of compressor stages and operable to remove air from the compressor stage, a heat exchanger having an input connected to the compressor bleed, and an output connected to an active cooling system of at least one turbine stage, optionally wherein the compressor stage in which the compressor bleed structure is disposed includes airflow at a pressure above a minimum pressure threshold, and wherein the airflow has a temperature above a maximum temperature threshold.

A further example of the above gas turbine engine includes, a controller connected to the heat exchanger such that heat exchanger operations are controllable by the controller.

In a further example of any of the above gas turbine engines, the heat exchanger is housed in an outer diameter structure of the gas turbine engine.

In a further example of any of the above gas turbine engines the minimum pressure threshold is defined as a magnitude of pressure required to prevent backflow of a cooling fluid entering the active cooling system of the at least one turbine stage.

In a further example of any of the above gas turbine engines the compressor stage in which the compressor bleed structure is disposed is a compressor stage having a flow path pressure greater than or equal to the threshold pressure, relative to fluid flow through the compressor.

In a further example of any of the above gas turbine engines the maximum temperature threshold is an upper bound of an optimum cooling temperature range.

In a further example of any of the above gas turbine engines approximately 100% of gas bled by the compressor bleed is cooled in the heat exchanger.

In a further example of any of the above gas turbine engines approximately 100% of gas cooled in the heat exchanger is provided to the active cooling system.

In a further example of any of the above gas turbine engines gas exiting the heat exchanger at the output is greater than or equal to a threshold pressure and less than or equal to a threshold temperature, where the threshold pressure is defined as a magnitude of pressure required to prevent backflow of a cooling fluid entering the active cooling system of the at least one turbine stage, and where the threshold temperature is defined as a maximum temperature at which the active cooling system adequately cools the at least one turbine stage.

In a further example of any of the above gas turbine engines the turbine section includes a high pressure turbine portion and a low pressure turbine portion and wherein the at least one turbine stage is a second stage of the high pressure turbine portion relative to fluid flow through the high pressure turbine portion.

In a further example of any of the above gas turbine engines the heat exchanger is sized such that gas passing through the heat exchanger is cooled to a temperature within an optimum cooling temperature range.

A method for cooling a turbine stage of a gas turbine engine according to claim 1 is disclosed in this document.

An exemplary method for cooling a turbine stage of a gas turbine engine includes removing gas from a compressor stage using a compressor bleed structure, cooling the gas using a heat exchanger, providing at least a portion of the cooled gas to an active turbine stage cooling system from the heat exchanger.

In a further exemplary embodiment of the above method, fluid at the compressor stage has a fluid pressure at least equal to a pressure threshold, and wherein the pressure threshold is a magnitude of pressure required to prevent backflow of a cooling fluid entering the active turbine stage cooling system.

In a further exemplary embodiment of any of the above methods, cooling the gas using the heat exchanger includes reducing a temperature of the gas such that gas output from the heat exchanger is within an optimum cooling temperature range.

In a further exemplary embodiment of any of the above methods, cooling the gas using the heat exchanger further includes actively controlling the heat exchanger using a controller.

In a further exemplary embodiment of any of the above methods, providing at least a portion of the cooled gas to the active turbine stage cooling system from the heat exchanger includes providing approximately 100% of the cooled gas to the active turbine stage cooling system.

In one exemplary embodiment, a turbine cooling air generation system for a gas turbine engine includes a first fluid pathway connected to an output of a compressor bleed at a first end and an input of a heat exchanger at a second end, and a second fluid pathway connected to an output of the heat exchanger at a first end and an input of a turbine stage active cooling system at a second end.

A further exemplary embodiment of the above turbine cooling air generation system, further includes a controller coupled to the heat exchanger and operable to actively control the heat exchanger.

In a further exemplary embodiment of any of the above turbine cooling air generation systems, fluid in the first fluid pathway has a temperature above a maximum bound of an optimum cooling temperature range and a pressure at least equal to a pressure threshold, wherein the pressure threshold is a magnitude of pressure required to prevent backflow of a cooling fluid entering the active turbine stage cooling system.

In a further exemplary embodiment of any of the above turbine cooling air generation systems, fluid in the second fluid pathway has a temperature within an optimum cooling temperature range and a pressure at least equal to the pressure threshold.

These and other features of the present invention can be best understood from the following specification and drawings, the following of which is a brief description.

### BRIEF DESCRIPTION OF THE DRAWINGS

Figure 1 schematically illustrates a gas turbine engine.
Figure 2 schematically illustrates a portion of the gas turbine engine of Figure 1 in greater detail.
Figure 3 illustrates a flowchart outlining a process for providing cooling air to a turbine stage cooling system.

### DETAILED DESCRIPTION OF AN EMBODIMENT

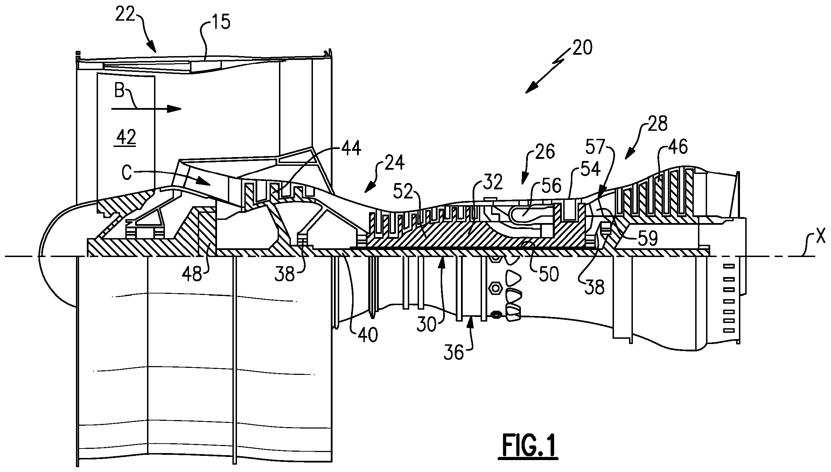

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine section 54. A mid-turbine frame 57 of the engine static structure 36 is arranged generally between the high pressure turbine section 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine section 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6:1), with an example embodiment being greater than about ten (10:1), the geared architecture 48 is an epicyclic gear train, such as a planetary gear system or other gear system, with a gear reduction ratio of greater than about 2.3 and the low pressure turbine 46 has a pressure ratio that is greater than about five (5:1). In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft, with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^0.5. The "Low corrected fan tip speed" as disclosed herein according to one non-limiting embodiment is less than about 1150 ft / second (350.5 m/s).

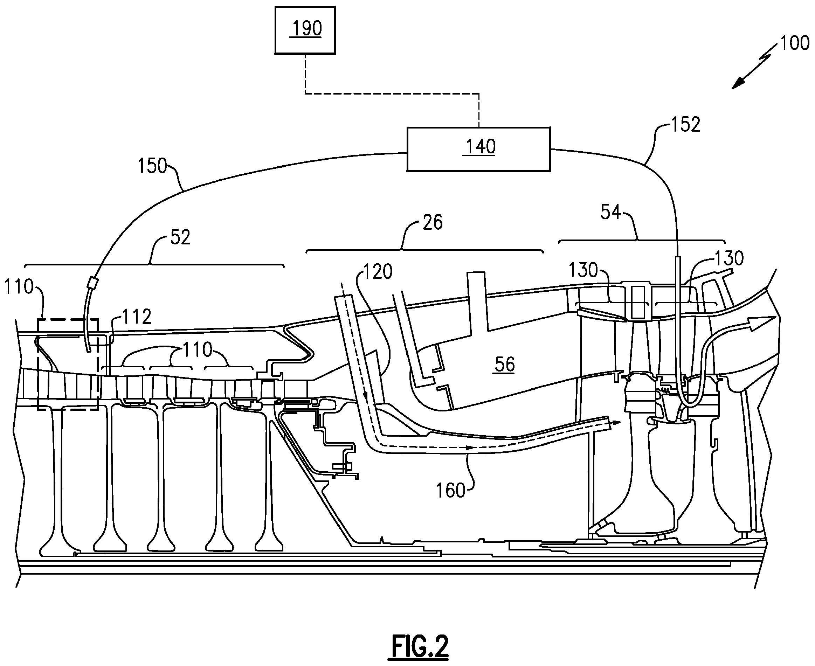

With continued reference to Figure 1, Figure 2 illustrates a partial view 100 of the gas turbine engine 20 illustrated in Figure 1 including the high pressure compressor section 52, the combustor section 26, and the high pressure turbine section 54. During operation of the gas turbine engine 20, gas is compressed in the high pressure compressor section 52, with each sequential stage 110 of the high pressure compressor section 52 having a higher pressure than the previous stage 110. The compression of the gas passing through the high pressure compressor section 52 causes the gas to increase in temperature. The compressed gas is expelled from the compressor section 54 at an opening 120 into the combustor section 26. Combustion in the combustor section 26 occurs within the combustor 56, and the resultant gasses from the combustion are directed from the combustor 56 into the high pressure turbine section 54. The gasses passing through the high pressure turbine section 54 drive rotation of the high pressure turbine section 54.

The heat from the combustion in the combustor 26, as well as the high temperatures of the gasses exiting the high pressure compressor section 52, cause the gasses entering the high pressure turbine section 54 to be at extreme temperatures. Without providing cooling to each of the stages 130 within the turbine sections 46, 54, the gasses passing through the turbine sections 46, 54 will exceed the workable temperature range of the turbine stages 130 causing thermal degradation of the components in the turbine stage 130.

In order to compensate for the high temperatures, cooling air is impinged upon, and passed through the turbine stages 130, thereby cooling the turbine stages 130 according to known turbine cooling techniques. In some example systems, the first stage 130 of the high pressure turbine section 54 is cooled via a turbine injection system 160 (alternately referred to as a Tangential On Board Injector, or TOBI). The turbine injection system 160 directs cooling air from a source located in the gas turbine engine onto the first stage 130 of the high pressure turbine section 54. In some examples, the source of the cooling air is a compressor bleed.

The illustrated turbine injector system 140 of Figure 2 does not cool the second stage 130 of the high pressure turbine section 54. In order to cool the second stage 130 of the high pressure turbine section 54, a cooling flow is passed through an interior passageway in a stator, and is expelled in such a manner that the cooling flow cools the second stage 130 of the high pressure turbine section 54.

Existing gas turbine engine systems provide air at the desired temperature to the second stage 130 of the high pressure compressor 54 from a compressor bleed. In order to ensure that the cooling air provided to the second stage 130 of the high pressure compressor section 54 does not backflow, the air at the compressor bleed must be at or above a minimum pressure threshold. Furthermore, in order to ensure full cooling of the turbine stage, the cooling air at the compressor bleed must be below a threshold cooling temperature.

In order to ensure that the gas provided in the cooling flow meets or exceeds the required pressure, the cooling gas is bled from a stage 110 in the high pressure compressor section 52. The selected stage is any compressor stage that meets or exceeds the pressure threshold, regardless of the temperature of the airflow at that stage 110. In a typical example, the stage 110 selected is the first compressor stage able to meet the pressure requirements of the cooling airflow.

In the illustrated example of Figures 1 and 2, gas is bled from the high pressure compressor section 52 at a compressor bleed 112. The bled gas exceeds the desired cooling temperature for cooling the corresponding stage 130 of the high pressure turbine section 54 and exceeds the minimum pressure requirement. If the bleed air is provided directly to the second stage 130 of the high pressure turbine 54, the cooling gas will provide insufficient cooling, resulting in quicker thermal degradation of the components in the second stage 130 of the high pressure turbine section 54. In one example the compressor stage 110 selected for the compressor bleed is the first compressor stage 110 having adequate pressure.

In order to improve the cooling capabilities, the illustrated gas turbine engine 20 includes a dedicated heat exchanger 140 to cool the air bled from the compressor section 52 at the compressor bleed 112 prior to providing the air to the turbine stage 130 for cooling. The heat exchanger 140 is controlled via a controller 190. In some examples the controller 190 is a full authority digital electronic controller (FADEC) that provides general controls through the aircraft that the gas turbine engine 20 is mounted on. In other examples, the controller 190 can be a dedicated controller incorporated into the heat exchanger 140. In yet further examples, the controller 190 can be omitted, and the heat exchanger can operate without active controls.

The heat exchanger 140 in the example of Figures 1 and 2 is connected to the compressor bleed 112 via a bleed flow path 150, and connected to cooling features in the corresponding turbine stage 130 via an actively cooled air flow path 152. In one example, each of the bleed flow path 150 and the actively cooled air flow path 152 are defined by ducting. In another example, the bleed flow path 150 and the actively cooled air flow path 152 are defined by a flow path pipe that is interrupted by the heat exchanger 140.

Because the heat exchanger 140 is a dedicated heat exchanger 140, and does not provide cooling air to any other gas turbine engine components, the heat exchanger 140 can be designed at a size and capacity required to cool the air from the compressor bleed 112 to the desired temperature, without overcooling the air. Overcooling occurs when the air output from the heat exchanger 140 is below an optimum cooling temperature. In some instances the optimum temperature is a threshold temperature that the air output from the heat exchanger 140 must be below for optimum cooling. In other examples, the optimum temperature is a range of acceptable cooling temperatures. In examples where the optimum temperature is a range of temperatures, the range has an upper bound defining the maximum temperature of the range and a lower bound defining the minimum temperature of the range.

As is understood in the art, any cooling performed by the heat exchanger 140 carries with it a corresponding reduction in performance of the gas turbine engine 20. As is understood by those of skill in the art, increased cooling capacity in a heat exchanger, such as the heat exchanger 140, carries requires an increase in size and weight. Furthermore, it is understood that any amount of energy utilized to cool the air in the heat exchanger 140 is energy that is not being dedicated to other engine functions, resulting in a decrease in engine performance. Thus, overcooling the air passing through the heat exchanger 140 results in an oversized heat exchanger 140, and an unnecessary decrease in the performance of the gas turbine engine.

As described previously, the heat exchanger 140 is sized to cool the air from the compressor bleed 112 to a desired temperature, or temperature range, without overcooling the air. By sizing the heat exchanger 140 accordingly, unnecessary weight penalties and performance losses are avoided.

It is further understood that in some examples, the controller 190 is capable of controlling the cooling capabilities of the heat exchanger 140. In these examples, the amount of cooling performed on the air from the compressor bleed 112 can be adjusted corresponding to the actual or expected temperatures of the cooled stage 130 of the high pressure turbine section 54. Adjusting the amount of cooling keeps the cooling air in the cooled air flow path 152 within the optimum cooling range despite different engine operating conditions, and further allows the heat exchanger 140 to reduce performance penalties associated with actively cooling the turbine stage cooling air.

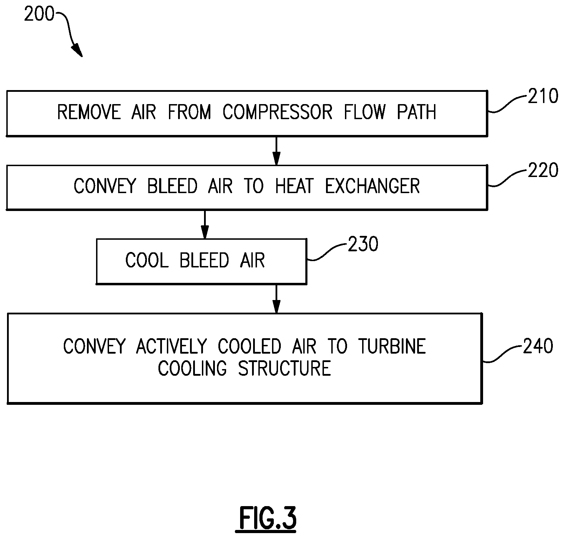

With continued reference to Figures 1 and 2, Figure 3 illustrates a process 200 by which cooling air is provided to a stage 130 of the high pressure turbine section 54. Initially air is removed from the compressor flow path using a compressor bleed 112 structure in a "remove air from compressor flow path" step 210. The compressor stage 110 selected is any compressor stage 110 where the air at the compressor bleed 112 has sufficient pressure to prevent backflow when provided to cooling structures in the corresponding stage 130 of the high pressure turbine section 54.

The removed air is then conveyed to the heat exchanger 140 in a "convey bleed air to heat exchanger" step 220. In some examples, the air is conveyed through a duct or a bleed air pipe connecting the compressor bleed structure '112 to the heat exchanger 140.

Once at the heat exchanger 140, the bleed air is actively cooled using a heat exchange process in a "cool bleed air" step 230. The active cooling process reduces the temperature of the air to a desired cooling temperature, or to within a desired range of cooling temperatures without decreasing the pressure of the air. During the active cooling process, all of the air removed from the compressor section 52 at the compressor bleed 112 is cooled by the heat exchanger 140.

The cooled, pressurized air, is then conveyed to a cooling structure of the second stage 130 of the high pressure compressor section 54 in a "convey actively cooled air to turbine cooling structure" step 240. As with the previous conveyance step 220, the cooled air in one example is conveyed using either a cool air pipe or a ducting system. Once the air reaches the turbine cooling structure, the cooling air is passed through the turbine structure and provides cooling to the turbine stage 130 according to known turbine stage cooling designs.

While the above examples are described and illustrated with regards to a cooling system for a two stage high pressure turbine, one of skill in the art having the benefit of this disclosure will understand that the cooling system can be applied to cooling for any turbine stage and is not limited to the second high pressure turbine stage. Furthermore, one of skill in the art having the benefit of this disclosure will understand that the above described cooling apparatus and system are not limited to two stage high pressure turbines, but can be applied to any other high pressure turbine configuration with minimal modifications.

The following claims should be studied to determine the true scope and content of this invention.

## Claims

1. A method for cooling a turbine stage of a gas turbine engine comprising:
removing gas from a compressor stage using a compressor bleed structure, the compressor stage having a flow path pressure greater than or equal to a minimum pressure threshold during at least one stage of operation, relative to fluid flow through the compressor during the at least one stage of operation;
cooling said gas using a heat exchanger housed in an outer diameter structure of the gas turbine engine;
providing at least a portion of said cooled gas to an active turbine stage cooling system of a turbine section from said heat exchanger, the turbine section including a high pressure turbine portion and a low pressure turbine portion, the active turbine stage cooling system cooling a second stage of the high pressure turbine portion relative to fluid flow through said high pressure turbine portion, wherein fluid exiting the heat exchanger does not exceed a maximum cooling temperature of the second stage of the turbine; and wherein fluid at said compressor stage has a fluid pressure in excess of the minimum pressure threshold, the minimum pressure threshold being a magnitude of pressure required to prevent backflow of a cooling fluid entering said active cooling system of said at least one turbine stage; and
wherein the gas exiting said heat exchanger at said output is greater than or equal to the minimum threshold pressure during the at least one stage of operation and less than or equal to the maximum threshold temperature during the at least one stage of operation.

2. The method of claim 1, wherein cooling said gas using said heat exchanger comprises:
reducing a temperature of said gas such that gas output from said heat exchanger is within an optimum cooling temperature range; and/or
actively controlling said heat exchanger using a controller.

3. The method of claim 1, wherein providing at least a portion of said cooled gas to said active turbine stage cooling system from said heat exchanger comprises providing approximately 100% of said cooled gas to said active turbine stage cooling system.

4. The method of any preceding claim, wherein:
said heat exchanger is configured such that approximately 100% of gas bled by said compressor bleed is cooled in said heat exchanger; and
said output of said heat exchanger is configured such that approximately 100% of gas cooled in said heat exchanger is provided to said active cooling system.

5. The method of any preceding claim, wherein said heat exchanger is sized such that gas passing through the heat exchanger is cooled to a temperature within an optimum cooling temperature range.

## Patentansprüche

1. Verfahren zum Kühlen einer Turbinenstufe eines Gasturbinentriebwerks, das Folgendes umfasst:
Entfernen von Gas aus einer Verdichterstufe unter Verwendung einer Verdichterablassstruktur, wobei die Verdichterstufe einen Strömungswegdruck aufweist, der größer oder gleich einer minimalen Druckschwelle während mindestens einer Betriebsstufe ist, relativ zu einer Fluidströmung durch den Verdichter während der mindestens einen Betriebsstufe;
Kühlen des Gases unter Verwendung eines Wärmetauschers, der in einer Außendurchmesserstruktur des Gasturbinentriebwerks untergebracht ist;
Bereitstellen von mindestens einem Teil des gekühlten Gases für ein aktives Turbinenstufenkühlsystem eines Turbinenabschnitts aus dem Wärmetauscher, wobei der Turbinenabschnitt ein Hochdruckturbinenteil und ein Niederdruckturbinenteil beinhaltet, wobei das aktive Turbinenstufenkühlsystem eine zweite Stufe des Hochdruckturbinenteils relativ zu einer Fluidströmung durch den Hochdruckturbinenteil kühlt, wobei Fluid, das aus dem Wärmetauscher austritt, eine maximale Kühltemperatur der zweiten Stufe der Turbine nicht überschreitet; und wobei Fluid an der Verdichterstufe einen Fluiddruck über der minimalen Druckschwelle aufweist, wobei es sich bei der minimalen Druckschwelle um eine Größenordnung von Druck handelt, die erforderlich ist, um eine Rückströmung eines Kühlfluids zu verhindern, welches in das aktive Kühlsystem der mindestens einen Turbinenstufe eintritt; und
wobei das Gas, das aus dem Wärmetauscher an dem Ausgang austritt, größer oder gleich des minimalen Schwellendrucks während der mindestens einen Betriebsstufe und kleiner oder gleich der maximalen Schwellentemperatur während der mindestens einen Betriebsstufe ist.

2. Verfahren nach Anspruch 1, wobei ein Kühlen des Gases unter Verwendung des Wärmetauschers Folgendes umfasst:
Reduzieren einer Temperatur des Gases, so dass sich der Gasausgang aus dem Wärmetauscher innerhalb eines optimalen Kühltemperaturbereichs befindet; und/oder
aktives Steuern des Wärmetauschers unter Verwendung einer Steuerung.

3. Verfahren nach Anspruch 1, wobei ein Bereitstellen von mindestens einem Teil des gekühlten Gases für das aktive Turbinenstufenkühlsystem aus dem Wärmetauscher ein Bereitstellen von etwa 100 % des gekühlten Gases für das aktive Turbinenstufenkühlsystem umfasst.

4. Verfahren nach einem der vorhergehenden Ansprüche, wobei:
der Wärmetauscher so konfiguriert ist, dass etwa 100 % des Gases gekühlt wird, das von dem Verdichterablass in dem Wärmetauscher abgelassen wurde; und
der Ausgang des Wärmetauschers so konfiguriert ist, dass etwa 100 % des Gases, das in dem Wärmetauscher gekühlt wird, für das aktive Kühlsystem bereitgestellt wird.

5. Verfahren nach einem der vorhergehenden Ansprüche , wobei der Wärmetauscher so dimensioniert ist, dass Gas, das durch den Wärmetauscher strömt, auf eine Temperatur innerhalb eines optimalen Kühltemperaturbereichs gekühlt wird.

## Revendications

1. Procédé de refroidissement d'un étage de turbine d'un moteur à turbine à gaz comprenant :
l'élimination du gaz depuis un étage de compresseur à l'aide d'une structure de purge de compresseur, l'étage de compresseur ayant une pression de trajet d'écoulement supérieure ou égale à un seuil de pression minimum pendant au moins une étape de fonctionnement, par rapport à un écoulement de fluide à travers le compresseur pendant l'au moins une étape de fonctionnement ;
le refroidissement dudit gaz à l'aide d'un échangeur de chaleur logé dans une structure de diamètre extérieur du moteur à turbine à gaz ;
la fourniture d'au moins une partie dudit gaz refroidi à un système de refroidissement d'étage de turbine actif d'une section de turbine depuis ledit échangeur de chaleur, la section de turbine comportant une partie de turbine haute pression et une partie de turbine basse pression, le système de refroidissement d'étage de turbine actif refroidissant un second étage de la partie de turbine haute pression par rapport à un écoulement de fluide à travers ladite partie de turbine haute pression, dans lequel le fluide sortant de l'échangeur de chaleur ne dépasse pas une température de refroidissement maximum du second étage de la turbine ; et dans lequel le fluide au niveau dudit étage de compresseur a une pression de fluide supérieure au seuil de pression minimum, le seuil de pression minimum étant une grandeur de pression requise pour empêcher le reflux d'un fluide de refroidissement entrant dans ledit système de refroidissement actif dudit au moins un étage de turbine ; et
dans lequel le gaz sortant dudit échangeur de chaleur au niveau de ladite sortie est supérieur ou égal à la pression seuil minimum pendant l'au moins une étape de fonctionnement et inférieur ou égal à la température seuil maximum pendant l'au moins une étape de fonctionnement.

2. Procédé selon la revendication 1, dans lequel le refroidissement dudit gaz à l'aide dudit échangeur de chaleur comprend :
la réduction d'une température dudit gaz de sorte que la sortie de gaz depuis ledit échangeur de chaleur est à l'intérieur d'une plage de températures de refroidissement optimale ; et/ou la commande active dudit échangeur de chaleur à l'aide d'un dispositif de commande.

3. Procédé selon la revendication 1, dans lequel la fourniture d'au moins une partie dudit gaz refroidi audit système de refroidissement d'étage de turbine actif depuis ledit échangeur de chaleur comprend la fourniture d'environ 100 % dudit gaz refroidi audit système de refroidissement d'étage de turbine actif.

4. Procédé selon une quelconque revendication précédente, dans lequel :
ledit échangeur de chaleur est configuré de sorte qu'environ 100 % du gaz prélevé par ladite purge du compresseur est refroidi dans ledit échangeur de chaleur ; et
ladite sortie dudit échangeur de chaleur est configurée de sorte qu'environ 100 % du gaz refroidi dans ledit échangeur de chaleur est fourni audit système de refroidissement actif

5. Procédé selon une quelconque revendication précédente, dans lequel ledit échangeur de chaleur est dimensionné de sorte que le gaz passant à travers l'échangeur de chaleur est refroidi à une température à l'intérieur d'une plage de températures de refroidissement optimale.
